# FASCICULE DE BREVET EUROPEEN

(11) **EP 1 648 230 B1**
(45) Date de publication et mention de la délivrance du brevet: **20.12.2006**
(21) Numéro de dépôt: 04742423.9
(22) Date de dépôt: 01.04.2004
(51) Int. Cl.: A01N 25/34, A01N 53/00

(54) **COMPOSITION A BASE D’UNE SUBSTANCE PYRETHROIDE DE SOLUBILITE AMELIORE, PRMIX ET ARTICLE INSECTICIDE ET ACARICIDE NOTAMMENT FIBREUX OU EN FEUILLE.**
ZUSAMMENSETZUNG AUS PYRETHROIDSUBSTANZ MIT VERBESSERTER LÖSLICHKEIT, VORMISCHUNG SOWIE INSEKTIZIDER UND AKARIZIDER GEGENSTAND, INBESONDERE IN FASER- ODER BLATTFORM
COMPOSITION MADE FROM A PYRETHROID SUBSTANCE WITH IMPROVED SOLUBILITY, PREMIX AND INSECTICIDAL AND ACARICIDAL ARTICLE PARTICULARLY OF FIBROUS OR SHEET-LIKE FORM

(30) Priorité: 01.04.2003 FR 0304011
(43) Date de publication de la demande: 26.04.2006
(73) Titulaire: Jean, Jacques, 87290 Châteauponsac (FR)
(72) Inventeur: Jean, Jacques, 87290 Châteauponsac (FR)
(74) Mandataire: Clisci, Serge
(86) Numéro de dépôt international: PCT/FR2004/000825
(87) Numéro de publication internationale: WO 2004/089086

(56) Documents cités:
- GB-A- 586 505
- DATABASE WPI Section Ch, Week 199736 Derwent Publications Ltd., London, GB; Class A18, AN 1997-389497 XP002263758 & JP 09 169916 A (FUKUBI KAGAKU KOGYO KK) 30 juin 1997 (1997-06-30) cité dans la demande
- DATABASE CA [Online] CHEMICAL ABSTRACTS SERVICE, COLUMBUS, OHIO, US; SALEH, MAHMOUD A. ET AL: "Penetration of household insecticides through different types of textile fabrics" XP002263756 extrait de STN Database accession no. 128:158197 & CHEMOSPHERE, vol. 36, no. 7, 1998, pages 1543-1552,

## Description

### Domaine de l'invention

La présente invention concerne le domaine des articles, notamment en textile ou en feuille, comportant une ou plusieurs substances insecticides et acaricides de contact, c'est à dire des articles qui permettent dans le temps un apport vers leurs surfaces de la ou des substances insecticides et acaricides incorporées dans leurs masses.

Elle vise plus précisément une composition (désignée ci-après "association" par commodité) à base d'une substance pyrèthroïde ayant une solubilité améliorée, un prémix contenant cette composition et un article, notamment fibreux ou en feuille, élaboré à partir de ladite composition et/ou dudit prémix, d'une part, et le procédé de préparation de ladite composition , dudit prémix et dudit article, d'autre part.

### Art antérieur

Les pyrèthroïdes sont commercialisés sous forme de solutions dans des solvants organiques à une concentration inférieure ou égale à 10 % p/p, en raison de leur insolubilité dans l'eau et de leur faible solubilité dans lesdits solvants organiques.

Pour préparer un article polymère contenant dans sa masse une ou plusieurs substances insecticides ou acaricides qui migrent au fur et à mesure vers sa surface , l'on fait appel à un prémix (la personne du métier parle de "masterbatch" ou de "mélange-maître") qui se présente sous la forme de granulés obtenus par mélange d'un polymère avec une solution d'un ou plusieurs pyrèthroïdes, chauffage puis extrusion.

Les pyrèthroïdes étant, comme indiqué plus haut, des substance insolubles dans l'eau et faiblement solubles dans les solvants organiques usuels, ledit prémix est au mieux préparé avec une solution dans un solvant organique (principalement l'éthanol) ne pouvant contenir au plus que 10 % p/p de substance(s) pyrèthroïde(s). En conséquence, au cours de la fabrication du prémix, il faut consommer de l'énergie pour chasser le solvant et prévoir des installations onéreuses pour (i) recueillir ledit solvant et (ii) protéger le personnel et l'environnement.

Par ailleurs, on connaît de la publication JP 9-169916 A un article obtenu par moulage d'un mélange comprenant (i) une résine (100 parties en poids ; du type ABS, PVC, polycarbonate ou acrylique) pourvue d'un agent antistatique, (ii) un pyrèthroïde (0,05-10 parties en poids) et (ii) un plastifiant (0,05-10 parties en poids) pouvant intervenir comme promoteur de migration vers la surface, l'agent antistatique utilisé pouvant être un tensioactif anionique, cationique, non-ionique ou amphotère. Ce document ne décrit ni ne suggère que ledit tensioactif soit éthyléniquement insaturé.

De JP 4-065509 A et de FR 2773823 A on connaît des fibres textiles obtenues par extrusion d'une matière polymère contenant 0,01 à 20 % en poids d'un pyrèthroïde ou d'un insecticide phosphoré.

De GB 586 505 A on connaît des matériaux textiles (principalement en acétate de cellulose) qui ont des propriétés insecticides et qui sont obtenus par imprégnation d'une étoffe avec une suspension aqueuse contenant un insecticide de contact et, le cas échéant, un dispersant. Parmi les insecticides sont mentionnés les extraits de racines de ***Derris**,* les extraits de fleurs de pyrèthre **(*Chrysanthemum*)** et, présenté comme étant le plus intéressant, le 1,1-di(4-chlorophényl)-2,2,2-trichloroéthane. Parmi les dispersants sont mentionnés les savons d'acides gras supérieurs, les huiles sulfonées, les sulfates d'alcools gras (notamment les sulfates de lauryle, de stéaryle et d'oléyle) et, présenté comme étant le préféré, le phtalate de diméthyle. Aucun exemple n'illustre la combinaison d'un extrait de pyrèthre avec le sulfate d'oléyle. En revanche les exemples, tels que fournis pour une étoffe en acétate de cellulose traitée au moyen d'une suspension aqueuse contenant ledit 1,1-di(4-chlorophényl)-2,2,2-trichloroéthane et ledit phtalate de diméthyle, font état d'un traitement à 30 °C environ, qui ne convient pas pour produire l'adduct (A-B) de l'invention.

De plus, l'art antérieur décrit des techniques de préparation d'une mousse polymère contenant dans sa masse un ingrédient actif, notamment une substance insecticide et/ou acaricide de contact.

On connaît en particulier de FR 2698632 A, un procédé selon lequel on disperse la substance insecticide et/ou acaricide dans un prépolymère ou un matériau polymérisable puis polymérise, à une température inférieure à 100 °C et de préférence à une température inférieure à 60 °C, le mélange résultant pour obtenir un article sous forme de mousse.

De GB 2098541 A on connaît un procédé de préparation d'un matériau composite à partir (a) d'une feuille support, (b) d'un produit actif (notamment un insecticide) sous forme de particules et (c) d'une feuille de mousse, ledit produit actif étant disposé entre les deux dites feuilles, l'ensemble étant solidarisé par fusion.

On sait en outre que les bâches anti-insectes et/ou anti-acariens utilisées dans la réalisation d'abris (notamment pour l'OMS) destinés aux personnes déplacées, sont préparées par foulardage d'une étoffe dans un bain contenant une substance insecticide et/ou acaricide afin d'apprêter ladite étoffe. Or il se trouve que les bâches ainsi obtenues perdent rapidement leur apprêt, notamment sous l'action des pluies et des vents.

En bref, l'art antérieur précité ne décrit ni ne suggère l'utilisation d'une association (A + B) "pyrèthroïde + composé éthyléniquement insaturé" qui fournit, à une température supérieure ou égale à 50 °C, un adduct par réaction (ou conjugaison) de la double liaison C=C de la structure chrysanthèmique du pyrèthroïde avec la double liaison C=C dudit composé éthyléniquement insaturé.

### But de l'invention

Il existe un besoin en ce qui concerne la mise à disposition d'une substance pyrèthroïde, qui ait une solubilité améliorée dans les solvants organiques, à savoir une solubilité dans l'éthanol d'au moins 75 % p/p (alors que la solubilité normale de ladite substance pyrèthroïde est de l'ordre de 10 % p/p dans l'éthanol), en vue de préparer, d'une part, un prémix avec un matériau polymère par extrusion puis, d'autre part, à partir de ce prémix un article insecticide et acaricide sous forme
- de fibres ou filaments susceptibles de fournir des textiles tissés, non-tissés ou tricotés, ou
- de feuille,
contenant dans sa masse une substance insecticide et acaricide, qui diffuse lentement dans le temps, pour lutter contre les parasites et nuisibles appartenant à l'ensemble des insectes et acariens, tels que mouches, moustiques et poux.

Selon l'invention on se propose de satisfaire ce besoin en remédiant aux insuffisances de l'art antérieur, notamment en améliorant la solubilité des pyrèthroïdes dans les solvants organiques tels que EtOH.

### Objet de l'invention

Ce besoin est satisfait ici en mettant en oeuvre une association (A + B) "pyrèthroïde + composé éthyléniquement insaturé", qui contient un adduct formé par réaction de la double liaison C=C de la structure chrysanthèmate du pyrèthroïde avec la double liaison C=C dudit composé éthyléniquement insaturé. Il a été constaté de façon inattendue que la présence dudit adduct améliore la solubilité de la substance pyrèthroïde.

Selon un premier aspect de l'invention, on fournit une nouvelle association (A+B) d'une substance insecticide et acaricide, qui est utilisable dans la réalisation d'un prémix et d'un article sous forme
- de fibres ou filaments susceptibles de fournir des textiles tissés, non-tissés ou tricotés, ou
- de feuille,
pour lutter contre les parasites et nuisibles appartenant à l'ensemble des insectes et acariens, tels que mouches, moustiques et poux, ladite association étant caractérisée en ce qu'elle comprend :
- au moins une substance pyrèthroïde (A) substantiellement stable jusqu'à une température d'au moins 150 °C, et de préférence substantiellement stable jusqu'à une température d'au moins 300 °C ;
- une substance éthyléniquement insaturé (B) choisie parmi l'ensemble constitué par :
   (a) les tensioactifs (B1),
   (b) les phosphates de vinyle (B2), et
   (c) leurs mélanges ; et,
- un adduct (A-B) résultant de la condensation de la substance pyréthroïde (A) avec la substance éthyléniquement insaturée (B).

Ladite association (A+B) a une solubilité dans l'éthanol supérieure ou égale à 75 % p/p. En pratique, cette solubilité dans EtOH se situe entre 75 et 90 % p/p en fonction de la nature de la substance pyrèthroïde (A) utilisée. A une telle concentration dans EtOH, la solution de l'association (A + B) est visqueuse mais suffisamment fluide pour couler par gravité et être versée.

Selon un second aspect de l'invention, on préconise un prémix caractérisé par le fait qu'il est un mélange intime d'un matériau polymère et de ladite association (A + B) qui est extrudé sous forme de granulés.

Selon un troisième aspect de l'invention, on propose une composition polymère insecticide et acaricide, caractérisée en ce qu'elle est constituée d'un mélange :
(a) d'un matériau polymère synthétique se présentant notamment sous forme de granulés et notamment choisi parmi les polyuréthanes, polypropylènes, polystyrènes, polyesters, poly(chlorure de vinyle), polyamides et leurs mélanges, et
(b) de ladite association (A + B);
   et en ce qu'elle est destinée à la réalisation d'un article sous forme
   - de fibres ou filaments susceptibles de fournir des textiles tissés, non-tissés ou tricotés, ou
   - de feuille.

On fournit, selon un autre aspect de l'invention, un article insecticide et acaricide se présentant sous la forme de fibres, filaments ou feuille, caractérisé en ce qu'il est constitué d'un matériau polymère synthétique contenant dans sa masse, ladite association (A + B), ladite substance (A) étant ensuite libérée de façon lente et programmée dans le temps par diffusion pour créer un environnement hostile aux insectes et acariens nuisibles, et en ce qu'il est obtenu à partir de ladite composition insecticide et acaricide visée ci-dessus, notamment par chauffage et extrusion.

Selon encore un autre aspect de l'invention, on recommande enfin un procédé pour la préparation dudit article, ledit procédé étant caractérisé en ce qu'il comprend les étapes consistant à
(1°) mélanger ledit matériau polymère synthétique avec ladite association (A + B) contenant le produit de la réaction de ladite substance pyrèthroïde (A) avec ladite substance éthyléniquement insaturée (B), et
(2°) chauffer et extruder le mélange résultant.

A l'étape (1°), ledit matériau polymère synthétique de départ est avantageusement sous forme solide (par exemple poudre, flocons, granulés) et ladite association (A + B) est avantageusement sous la forme d'une solution dans un solvant organique, notamment EtOH, à une concentration de 75 % à 90 % p/p.

### Description détaillée de l'invention

Pour résoudre le problème de l'incorporation ou de l'encapsulation d'une substance insecticide et acaricide dans des fibres, fils, filaments ou feuilles en vue de la diffusion de ladite substance insecticide et acaricide de façon lente et programmée dans le temps, et en vue de créer un environnement hostile aux insectes et acariens nuisibles tels que les mouches, moustiques et poux, on propose une nouvelle solution technique.

Cette nouvelle solution technique consiste à réaliser l'introduction de ladite substance insecticide et acaricide (A), sous la forme de ladite association (A + B) dans le matériau polymère synthétique au cours du processus de la formation, notamment par chauffage et extrusion, du premix d'une part, puis des fibres, filaments ou feuilles, d'autre part. Elle convient quand le matériau polymère synthétique est un polyester, qui implique un traitement de la composition du matériau polymère synthétique et de l'association (A + B) à température élevée, notamment de l'ordre de 280-300 °C, ou un polypropylène, qui implique un traitement à environ 100 °C. Elle convient également quand ledit matériau polymère synthétique n'est pas substantif vis-à-vis de la substance (A), voire peu compatible avec celle-ci, c'est à dire quand ledit matériau polymère synthétique est choisi parmi les polyuréthanes, polypropylènes, polystyrènes, poly(chlorure de vinyle), polyamides et leurs mélanges.

En bref cette nouvelle solution technique convient pour l'ensemble des substances pyrèthroïdes, quelle que soit la nature du matériau polymère synthétique. Ainsi, ledit matériau polymère synthétique peut être choisi parmi les polyuréthanes, polypropylènes, polystyrènes, polyesters, poly(chlorure de vinyle), polyamides et leurs mélanges. La substance éthyléniquement insaturée (B) présente l'avantage de rendre la substance pyrèthroïde (A) compatible avec ledit matériau polymère synthétique.

De façon avantageuse, on fera appel à une association (A + B) renfermant
- 75 à 96 % en poids total d'une substance (A) choisie parmi l'ensemble constitué par les pyrèthroïdes substantiellement stables jusqu'à une température de 150 °C au moins, et de préférence substantiellement stables jusqu'à une température de 300 °C au moins, et leurs mélanges ; et,
- 25 à 4 % en poids total d'une substance éthyléniquement insaturée (B) choisie parmi les tensioactifs (B1), les phosphates de vinyle (B2) et leurs mélanges, et qui est substantiellement stable à une température supérieure ou égale à 150 °C et avantageusement substantiellement stable à une température supérieure ou égale à 300 °C;
ladite association (A + B) contenant ledit adduct (A-B) qui se forme à partir d'une température supérieure ou égale à 80 °C, notamment à une température de 80 à 150 °C.

### La substance pyrèthroïde (A)

Par "pyrèthroïde" on entend ici un produit présentant dans sa molécule le groupe chrysanthèmate [i. e. le groupe 2,2-diméthyl-3-(1-éthényl)cyclopropanecarboxylate] de structure Io : 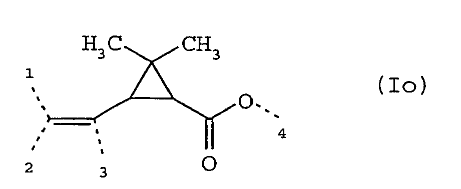 où --- représente une liaison avec un atome d'hydrogène (pour au plus deux des positions 1, 2 et 3) ou un autre atome (en positions 1, 2, 3 et/ou 4), comme illusté notamment dans les formules II et I ci-après.

La substance pyrèthroïde (A) est choisie parmi l'ensemble constitué par (i) les composés de la famille des alléthrines, cinérines, jasmolines et pyréthrines, (ii) leurs dérivés notamment élaborés par synthèse ou hémisynthèse, et (iii) leurs mélanges.

De façon avantageuse, la dite substance pyrèthroïde (A) intervenant dans l'association (A + B) sera choisie parmi l'ensemble constitué par les pyrèthroïdes de formule II : 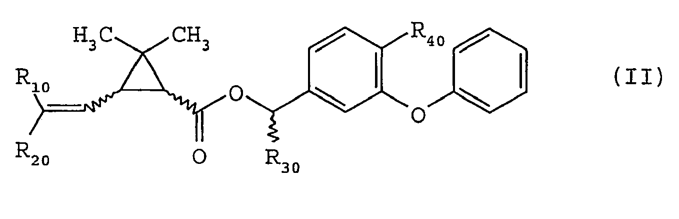 dans laquelle,
- R₁₀ et R₂₀, identiques ou différents, représentent chacun H, CH₃, OCH₃, SCH₃, CF₃, OCF₃, F, Cl ou Br ;
- R₃₀ représente H, CH₃, CN, CF₃, F, Cl ou Br ;
- R₄₀ représente H, CH₃, CF₃, OH, SH, F, Cl ou Br ; et,
- le symbole 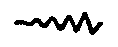 représente une liaison de configuration R ou S ;
et leurs mélanges.

Parmi les composé de formule II, on préfère plutôt les produits de formule I qui suivent : 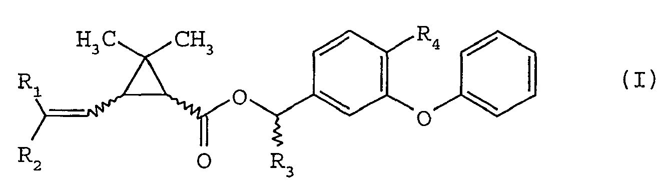 dans laquelle,
- R₁ et R₂, identiques ou différents, représentent chacun CH₃, Cl ou Br;
- R₃ représente H ou CN ;
- R₄ représente H ou F ; et,
- le symbole 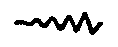 représente une liaison de configuration R ou S ; et leurs mélanges.

Les substances pyrèthroïdes (A) que l'on préfère selon l'invention sont l'alléthrine I, qui est stable jusqu'à une température supérieure à 400 °C, voir Merck Index, 12ème édition, 1996, page 255, et les produits de formule I, notamment la deltaméthrine, qui est stable jusqu'à 320 °C.

En bref, parmi les pyrèthroïdes qui conviennent dans le cadre de ladite association (A + B) on recommande les substances choisies parmi l'ensemble constitué par 1' alléthrine I, la bifenthrine, la bioresméthrine, la cycléthrine, la cyhalothrine, la cyfluthrine, la cyperméthrine, la cyphénothrine, la deltaméthrine, la fenpropathrine, la fluméthrine, la perméthrine, qui comportent toutes le groupe précité de structure Io dans leur formule, et leurs mélanges.

Les substances pyrèthroïdes (A), que l'on préfère plus particulièrement pour la mise en oeuvre de l'invention, sont la deltaméthrine, la cyperméthrine (plus avantageusement l'α-cyperméthrine), la cyhalothrine (plus avantageusement la λ- cyhalothrine) et l'alléthrine I.

### La substance éthyléniquement insaturée (B)

La substance éthyléniquement insaturée (B) est une substance choisie parmi les tensioactifs (B1), les composés organophosphorés de la famille des phosphates de vinyle (B2) et leurs mélanges.

Parmi les substances tensioactives (B1), on peut notamment citer les amines et polyamines de formules III et IV, les amines et polyamines polyoxyalkylénées de formule V (qui dérivent des produits de formule III ou IV précités) et les alkénylphénols polyoxyalkylénés de formule VI :

R-[NH-(CH₂)ₘ]ₙ-NH₂ (III)

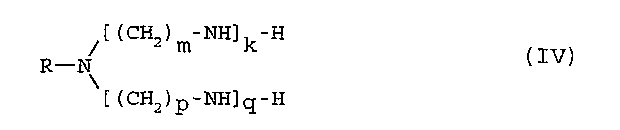

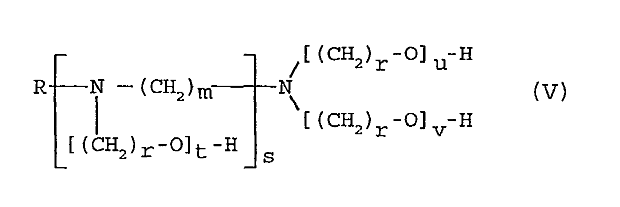

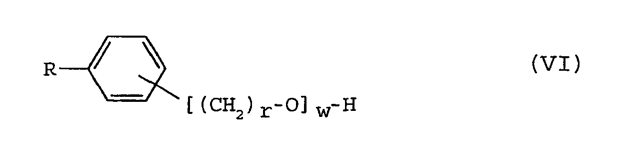

dans lesquelles :
- R: est un reste hydrocarboné aliphatique insaturé à chaîne linéaire (de préférence) ou ramifiée en C₈-C₂₂,
- k: est un nombre entier ayant pour valeur 1 à 8,
- m: est un nombre entier ayant pour valeur 2 à 8,
- n: est un nombre entier ayant pour valeur 0 à 8,
- p: est un nombre entier ayant pour valeur 1 à 8,
- q: est un nombre entier ayant pour valeur 1 à 8,
- r: est un nombre entier ayant pour valeur 2 ou 3,
- s: est un nombre entier ayant pour valeur 0 à 8,
- t: est un nombre entier ayant pour valeur 1 à 8,
- u: est un nombre entier ayant pour valeur 0 à 8, et
- v: est un nombre entier ayant pour valeur 0 à 8,
- w: est un nombre entier ayant pour valeur 3 à 8.

Dans les formules III à VI, R peut notamment représenter le groupe : oléyle de structure CH₃(CH₂)₇CH=CH(CH₂)₈-, linoléyle de structure CH₃(CH₂)₄CH=CHCH₂CH=CH(CH₂)₂-, linolényle de structure CH₃CH₂CH=CHCH₂CH=CHCH₂CH=CH(CH₂)₈-, ou encore γ-linolényle. Le groupe R préféré est le groupe oléyle.

D'une façon pratique et pour faire appel à des produits disponibles dans le commerce, les nombres t, u et v dans la formule V seront avantageusement tels que la somme (st)+u+v soit comprise entre 2 et 22.

On peut également utiliser les oléates de sorbitan (notamment le trioléate de sorbitan) qui sont des produits éthyléniquement insaturés.

Par "phosphate de vinyle" on entend ici un produit présentant dans sa molécule la structure VII : 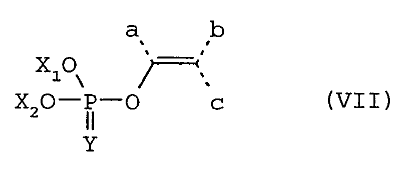 dans laquelle :
- X₁ et X₂,: identique ou différents, représentent chacun un groupe alkyle inférieur en C₁-C₄,
- Y: représente O ou S, et
- ---: représente une liaison avec un atome d'hydrogène (pour au plus deux des positions a, b et c) ou un autre atome (en positions a, b et/ou c),
la double liaison C=C pouvant être incluse dans un hétérocycle.

Les phosphates de vinyle (B2) selon l'invention sont des substances déjà connues en tant qu'insecticides et/ou acaricides. Voir notamment à cet effet les brevets délivrés US 2685552 A, US 2956073 A, US 2982682 A, US 3003916 A et US 3102842.

Parmi ces phosphates de vinyle (B2), on recommande le dichlorvos, le pirimiphos-méthyl et le chlorpyrifos de formules VIII, IX et, respectivement X :

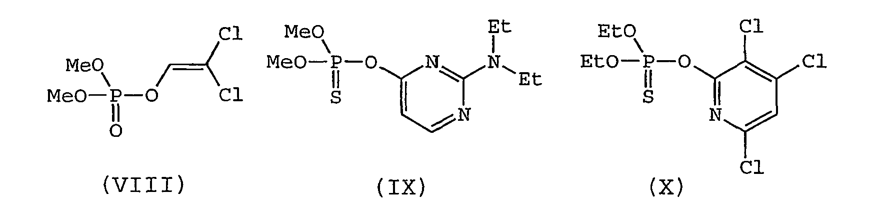

Même s'ils ne sont peu efficaces comme insecticides et acaricides, on peut utiliser le chlorfenvinphos et le crotoxyphos dès lors qu'ils comportent la structure VII.

On peut, le cas échéant, utiliser en combinaison avec ladite substance éthyléniquement insaturée (B), qui est un produit B1 ou B2, d'autres tensioactifs, tels que les polysorbates, arylsulfates, alkylarylsulfates, aryl-alkylsulfates, les alkylphénol polyéthoxylés (notamment les nonoxynols), les esters de sorbitan [par exemple les polysorbates tels que le Tween^{®}80] et leurs mélanges.

### L'adduct (A-B)

Par mise en contact de la substance pyrèthroïde (A) avec la substance éthyléniquement insaturée (B) puis chauffage, l'adduct (A-B) se forme à partir d'une température supérieure ou égale à 80 °C. En pratique, ledit adduct se forme à une température comprise entre 80 et 150 °C et est détecté notamment par l'analyse du spectre calorimétrique.

L'analyse du spectre calorimétrique (sur appareil METTLER TOLEDO STAR^{®}, chauffage de 30 à 400 °C à raison de 5° C/minute, avec échantillon d'une masse de 4.2 à 4.6 mg) montre en effet que le produit d'addition du dichlorvos (substance B2) avec une substance pyrèthroïde (A), telle que notamment la bioresméthrine, la cyperméthrine ou la deltaméthrine, est une substance pure ayant un pic spécifique se situant entre environ 230 et environ 280 °C.

En pratique, avant son utilisation avec le matériau polymère synthétique, l'association (A + B) est traitée comme indiqué ci-dessus à une température de 80 à 150 °C, sous agitation, pendant au moins 20 minutes, notamment pendant 30 à 60 minutes.

### Le prémix ("masterbacth") et l'article

On utilise ladite association (A + B) pour obtenir un article, le cas échéant, par l'intermédiaire d'un prémix ou masterbacth sous forme de granulés et transportable sur le lieu de production. Ledit article se présente sous la forme de fibres ou filaments pouvant fournir des textiles tissés, non-tissés ou tricotés, ou sous la forme d'une feuille. Dans cet article, est incorporée ou encapsulée ladite substance (A), qui est la matière essentiellement active de l'association (A + B) eu égard aux quantités respectives utilisées de (A) et (B).

Le prémix, est avantageusement constitué d'un mélange intime de 15 à 30 % en poids sec de l'association (A + B) et de 85 à 70 % en poids sec d'un matériau polymère synthétique notamment choisi parmi les polyuréthanes, polypropylènes, polystyrènes, polyesters, poly(chlorure de vinyle), polyamides et leurs mélanges.

Il est obtenu à l'état de granulés par chauffage (à une température supérieure ou égale 80 °C, notamment à une température de 80 à 150 °C, voire jusqu'à 300 °C, quand le matériau polymère est un polyester, et extrusion d'une composition comprenant une solution éthanolique à 75-90 % p/p de l'association (A + B) et ledit matériau polymère notamment sous forme de granulés ou de poudre.

L'article sous forme de fibres ou filaments est destiné en particulier à réalisation d'étoffes textiles tissées, non-tissées ou tricotées. L'article sous forme de feuille est notamment destiné, après découpe, à réalisation de rubans.

L'article selon l'invention est très efficace vis-à-vis des nuisibles que sont les mouches, en particulier la mouche domestique ***Musca domestica**,* les moustiques, notamment ***Aedes aegypti,*** les poux, notamment ***Pediculus humanus capitis*** (pou humain de tête), ***Pediculus humanus vestimenti*** (pou humain de corps) et ***Phthirius pubis,*** les fourmis, les blattes et les acariens, notamment les acariens de la poussière de maison ***Dermatophagoides farinea*** et ***Dermatophagoides pteronyssinus.*** En revanche, il est inoffensif vis-à-vis de l'homme, des animaux à sang chaud et des abeilles, eu égard aux teneurs généralement utilisées de 0,1 à 0,5 % en poids (vis-à-vis des rampants) ou de 0,5 à 5 % en poids (vis-à-vis des volants) en substance pyrèthroïde (A) provenant de l'association (A + B), par rapport au poids dudit article.

Eu égard aux teneurs indiquées ci-dessus, quand l'association (A + B) contient du dichlovos, on est très largement en dessous du seuil maximal de 7 % en dichlorvos (par rapport au poids de l'article final) retenu par les règlements français et communautaires.

Un des articles insecticides et acaricides selon l'invention se présente sous une forme tissée (notamment pour la réalisation de draps, taies d'oreillers, voilages, vêtements et toiles), non-tissée (notamment pour les garnitures et remplissages d'articles de literies) ou tricotée (notamment pour les tulles de moustiquaires), qui est obtenue à partir desdites fibres ou desdits filaments.

Les fibres, fils, filaments et feuilles de l'article de l'invention comportent dans leur masse la substance pyrèthroïde (A). La teneur préférée en substance pyrèthroïde (A) ou en association (A + B) est de 0,1 à 1 % en poids par rapport au dudit article.

Le flux en matière active [(A) ou (A + B2)] libérée par l'article de l'invention est en général inférieur à 100 ng/cm²/jour, et est pratiquement de l'ordre de 50 ng/cm²/jour. Or il suffit d'avoir à la surface de l'article de l'invention une concentration de 50 ng/cm² pour tuer tout insecte ou acarien nuisible se trouvant en contact ou dans l'environnement dudit article. Ainsi, une étoffe tissée de 1 m², d'une masse de 200 g, contenant 0,2g (i. e. 0,1 %) de matière active et libérant celle-ci selon un flux de 50 ng/cm²/jour présente une efficacité insecticide et acaricide théorique de 400 jours et une efficacité insecticide et acaricide pratique supérieure à 1 voire 2 ans.

### Le procédé

Le procédé de préparation préféré selon l'invention comprend les étapes consistant à :
(α) chauffer une association de 75 à 96 % en poids de ladite substance (A) et, respectivement, de 25 à 4 % en poids de ladite substance (B), à une température comprise entre 80 et 150 °C, pendant au moins 20 minutes, notamment pendant 30 à 60 minutes, sous agitation, pour homogénéiser ladite association (A + B), où ladite substance (A) est susceptible d'être un mélange de plusieurs énantiomères ;
(β) introduire sous agitation l'association (A + B), ainsi homogénéisée, dans une portion dudit matériau polymère synthétique ou de son(ses) précurseur(s) [i.e. monomère(s) et/ou prépolymère(s)], pour obtenir un premier mélange par chauffage et extrusion ;
(γ) introduire sous agitation ledit premier mélange, ainsi obtenu, dans le reste dudit matériau polymère synthétique ou de son(ses) précurseur(s) [i. e. lesdits monomère(s) et/ou prépolymère(s)], pour obtenir un second mélange ; et
(δ) chauffer et extruder ledit second mélange résultant, ainsi obtenu, à une température inférieure ou égale à 300 °C, pour obtenir l'article insecticide et acaricide contenant dans sa masse ladite association (A + B), ledit article étant notamment, soit sous la forme de fibres, filaments ou feuille, soit sous la forme d'une étoffe textile tissée, non-tissée ou tricotée obtenue à partir desdits fibres ou filaments.

La mise en oeuvre en deux temps, étape (β) puis étape (γ), a pour but d'assurer une bonne homogénéisation d'une très faible masse (avantageusement ici 0,1 à 1 partie en poids) d'association (A + B) dans une masse importante (avantageusement ici 99,9 à 99 parties en poids) de matériau polymère synthétique ou de son ou ses précurseurs (un ou plusieurs monomères, un ou plusieurs prépolymères).

De façon pratique, à l'étape (β) on prépare ledit prémix ("masterbatch"), qui contient 15 à 30 % en poids sec (de préférence 25 % en poids sec) de ladite association (A + B) et 85 à 70 % en poids sec de matériau polymère ; puis à l'étape (γ), qui est une "dilution", on mélange le prémix ainsi obtenu avec le solde du matériau polymère jusqu'à une concentration finale en association (A + B) de 0,1 à 1 % en poids.

A l'étape (β) on peut introduire tout autre additif requis, par exemple un colorant.

D'autres avantages et caractéristiques de l'invention seront mieux compris à la lecture qui va suivre d'exemples de réalisation et d'essais d'efficacité. Bien entendu, l'ensemble de ces éléments n'est nullement limitatif mais est fourni à titre d'illustration.

### Exemple 1 (comparatif)

(a) On chauffe pendant 20-30 minutes à 80-95 °C et sous agitation un mélange ayant la formulation suivante : ,

| | |
|---|---|
| Perméthrine | 75 parties en poids |
| Polysorbate (Tween^{®}80) | 25 parties en poids |

pour obtenir une association perméthrine + tensioactif non éthylèniquement insaturé, qu'on laisse refroidir jusqu'à la température ambiante (15-25 °C).
(b) Une quantité de 0,1 partie en poids de cette association, ainsi obtenue, est mélangée sous agitation dans 0,3 partie en poids de polypropylène isotactique pour obtenir un masterbatch. On alimente une extrudeuse à double vis avec le mélange ainsi obtenu et 99,6 parties en poids dudit polypropylène isotactique. On chauffe et extrude la composition résultante à 100-120 °C pour obtenir des fils de polypropylène contenant dans leur masse ladite perméthrine.
(c) A partir des fils ainsi obtenus on fabrique des textiles tissés, non-tissés ou tricotés.

### Exemple 2

(a) On chauffe pendant 30 minutes à 130 °C et sous agitation un mélange ayant la formulation suivante :

| | |
|---|---|
| Deltaméthrine | 85 parties en poids |
| Dichlorvos | 15 parties en poids |

pour obtenir une association (A + B) selon l'invention, qu'on laisse refroidir jusqu'à la température ambiante ou qui est soumise encore à chaud (notamment à une température de 70-90 °C) au traitement de l'étape suivante.
(b) Une quantité de 0,1 partie en poids de l'association (A + B), ainsi obtenue, est mélangée sous agitation avec 0,3 partie en poids de polyester. Le mélange résultant est introduit avec 99,6 parties en poids du même polyester dans une extrudeuse à double vis. On chauffe et extrude la composition résultante à 280-300 °C pour obtenir des fils de polyester contenant dans leur masse ladite association (A + B).
(c) A partir des fils ainsi obtenus on fabrique des textiles tissés, non-tissés ou tricotés.

### Exemple 3

(a) On chauffe pendant 60 minutes à 80-120 °C et sous agitation un mélange ayant la formulation suivante :

| | |
|---|---|
| Cyperméthrine | 80 parties en poids |
| Nonoxynol (SYNPERONIC^{®} NP6) | 10 parties en poids |
| Dichlorvos | 10 parties en poids |

(où le nonoxynol est un tensioactif non-ionique qui n'est pas éthyléniquement insaturé) pour obtenir une association (A + B) selon l'invention, qu'on laisse refroidir jusqu'à la température ambiante ou qui est soumise encore à chaud au traitement de l'étape suivante.
(b) Une quantité de 0,1 partie en poids de l'association (A + B), ainsi obtenue, est mélangée sous agitation avec 0,3 partie en poids de polyamide. Le mélange résultant est introduit avec 99,6 parties en poids du même polyamide dans une extrudeuse à double vis. On chauffe et extrude la composition résultante à 280-300 °C pour obtenir des fils de polyamide contenant dans leur masse ladite association (A + B).
(c) A partir des fils ainsi obtenus on fabrique des textiles tissés, non-tissés ou tricotés.

### Exemple 4

(a) On chauffe pendant 60 minutes à 130-150 °C et sous agitation un mélange ayant la formulation suivante :

| | |
|---|---|
| Deltaméthrine | 96 parties en poids |
| Dichlorvos | 4 parties en poids |

pour obtenir une association (A + B) selon l'invention, qu'on laisse refroidir jusqu'à la température ambiante ou qui est soumise encore à chaud au traitement de l'étape suivante.
(b) Une quantité de 0,5 partie en poids de l'association (A + B), ainsi obtenue, est mélangée avec 1,5 parties en poids de polystyrène. Le mélange résultant est introduit avec 98 parties en poids du même polystyrène dans une extrudeuse à double vis. On chauffe et extrude la composition résultante à 250-280 °C pour obtenir des fils de polystyrène contenant dans leur masse ladite association (A + B).
(c) A partir des fils ainsi obtenus on fabrique des textiles tissés, non-tissés ou tricotés.

### Exemple 5 (comparatif)

(a) Une quantité de 0,1 partie en poids de deltaméthrine est mélangée avec 0,3 partie en poids de polyester. Le mélange résultant est introduit avec 99,6 parties en poids du même polyester dans une extrudeuse à double vis. On chauffe et extrude la composition résultante à 280-300 °C pour obtenir des fils de polyester contenant dans leur masse ladite deltaméthrine.
(b) A partir des fils ainsi obtenus on fabrique des textiles tissés, non-tissés ou tricotés.

### Exemple 6

On procède comme indiqué à l'exemple 4, en remplaçant le dichlorvos par une même quantité de trioléate de sorbitan. On fabrique *in fine* des textiles tissés, non-tissés ou tricotés.

### Essai 1

On a mesuré le flux de matière active insecticide et acaricide libérée par diffusion à partir des étoffes tissées préparées selon les exemples 1 (c), 2(c), 3(c), 4(c), 5(b) et 6, un, trois et six mois après leur fabrication.

Les résultats, qui ont été obtenus, sont consignés dans le tableau I ci-après. Ils montrent l'intérêt de l'association (A + B) selon l'invention dans la réalisation des étoffes selon Ex. 2(c), Ex. 3(c), Ex. 4(c) et Ex. 6 par rapport aux exemples comparatifs Ex. 1(c) et Ex. 5(b).

**Tableau I**

| Flux de substance active libérée | | | |
|---|---|---|---|
| Exemples | Flux (ng/cm²/jour) | | |
| | après 1 mois | après 3 mois | après 6 mois |
| Ex. 1(c)* | 50 | 47 | 33 |
| Ex. 2(c) | 50 | 50 | 50 |
| Ex. 3(c) | 50 | 50 | 50 |
| Ex. 4(c) | 78 | 78 | 78 |
| Ex. 5(b)* | 50 | 49 | 38 |
| Ex. 6 | 52 | 52 | 52 |
| Note | | | |
| (*) : exemple comparatif | | | |

### Essai 2

Les propriétés insecticides et acaricides des étoffes tricotées (du type tulle pour moustiquaire), obtenues selon le procédé des exemples 2(c), 3(c), 4(c) et 6 ont été étudiées, 2 mois après la fabrication desdites étoffes, en appréciant la mortalité d'insectes ou d'acariens nuisibles de souches connues mises en présence desdites étoffes dans une salle répondant à des caractéristiques précises et dans des conditions déterminées reproduites ci-après.

### Protocole

### 1. Matériel

### α Salle d'essai

Les expérimentations sont conduites dans une salle vide de 30 m² maintenue à 25 ± 1 °C, sous une humidité relative de 65 ± 5 %, en accord avec les dispositions de la norme française AFNOR NF T 72-320, et au centre de laquelle est disposée horizontalement à 1 m au-dessus du sol l'étoffe à tester.

### β Insectes et acariens

Les mouches ***(Musca domestica)*** proviennent d'une souche de laboratoire réputée non résistante aux insecticides (Souche OMS/WHO) fournie par le Centre de Recherche d'Huntington, Cambridgeshire, UK. On utilise des adultes des deux sexes âgés de 5 à 8 jours.

Les moustiques ***(Aedes aegypti)*** proviennent d'une souche de laboratoire réputée non résistante aux insecticides (Souche OMS ORSTOM). On utilise des adultes des deux sexes âgés de 4 à 6 jours.

Les acariens **(*Dermatophagoides pteronyssus*)** proviennent d'une souche de laboratoire réputée non résistante aux acaricides (Souche INRA). On utilise un lot d'une centaine d'individus comprenant statistiquement tous les stades de développement (reproduction de la réalité domestique).

### 2. Mode opératoire

### α Déroulement de l'essai

L'étoffe tricotée à tester est laissée en décharge pendant douze heures dans la salle d'essai. Ensuite on lâche les insectes (mouches + moustiques) dans la salle d'essai ou on dépose les acariens sur l'étoffe à tester pourvue d'un rebord périphérique empêchant lesdits acariens de se sauver. Les insectes et acariens traités restent en observation dans la salle d'essai pendant 1 h. La mortalité des mouches et moustiques est appréciée visuellement toutes les cinq minutes, celle des acariens est étudiée à l'issue du traitement de l'exposition de 1 h dans la salle d'essai.

On procède à deux expérimentations par étoffe à tester, la même étoffe étant utilisée deux fois de suite avec les mouches, les moustiques ou, respectivement les acariens.

### β Décontamination de la salle d'essai

Après chaque essai, la salle d'essai est lavée et séchée. Un renouvellement d'air est assuré par un extracteur d'air ayant un débit de 1200 m³.h⁻¹.

50 mouches sont lâchées dans la salle d'essai avant une nouvelle expérimentation en vue de vérifier l'absence de pollution de ladite salle d'essai. La mortalité des mouches doit alors être inférieure à 3 % en 0,5 h ; dans le cas contraire, la salle est à nouveau lavée et séchée, puis à nouveau contrôlée jusqu'à parfaite décontamination.

### γ Etoffes à tester

Les étoffes à tester sont des tricots de forme carrée ayant 21 cm de côté et ont été préparées selon le procédé des exemples 2(c), 3(c), 4(c) et 6.

### 3. Résultats

On observe que après 1 h d'exposition (i) plus de 80 % des mouches et moustiques sont tués par la matière active des tricots à tester, et (ii) tous les acariens sont tués.

Les essais complémentaires entrepris vis-à-vis des poux et des blattes confirment l'efficacité des articles selon l'invention.

## Revendications

1. Association (A+B) d'une substance insecticide et acaricide, qui est utilisable dans la réalisation d'un prémix et d'un article sous forme
• de fibres ou filaments susceptibles de fournir des textiles tissés, non-tissés ou tricotés, ou
• de feuille,
pour lutter contre les parasites et nuisibles appartenant à l'ensemble des insectes et acariens, tels que mouches, moustiques et poux, ladite association étant **caractérisée en ce qu'**elle comprend :
• au moins une substance pyrèthroïde (A) substantiellement stable jusqu'à une température d'au moins 150 °C, et de préférence substantiellement stable jusqu'à une température d'au moins 300 °C ;
• une substance éthyléniquement insaturé (B) choisie parmi l'ensemble constitué par :
(a) les tensioactifs (B1),
(b) les phosphates de vinyle (B2), et
(c) leurs mélanges ; et,
• un adduct (A-B) résultant de la condensation de la substance pyréthroïde (A) avec la substance éthyléniquement insaturée (B).

2. Association (A + B) suivant la revendication 1, **caractérisée en ce qu'**elle a une solubilité dans l'éthanol supérieure ou égale à 75 % p/p, et se situant notamment entre 75 et 90 % p/p.

3. Association (A + B) suivant la revendication 1 ou 2, **caractérisée en ce qu'**elle renferme
• 75 à 96 % en poids total d'une substance (A) choisie parmi l'ensemble constitué par les pyrèthroïdes substantiellement stables jusqu'à une température de 150 °C au moins, et de préférence substantiellement stables jusqu'à une température de 300 °C au moins, et leurs mélanges ; et,
• 25 à 4 % en poids total d'une substance éthyléniquement insaturée (B) choisie parmi les tensioactifs (B1), les phosphates de vinyle (B2) et leurs mélanges, et qui est substantiellement stable à une température supérieure ou égale à 150 °C et avantageusement substantiellement stable à une température supérieure ou égale à 300 °C;
ladite association (A + B) contenant ledit adduct (A-B) qui se forme à partir d'une température supérieure ou égale à 80 °C, notamment à une température de 80 à 150 °C.

4. Association (A + B) suivant l'une quelconque des revendications 1 à 3, **caractérisée en ce que** la substance pyrèthroïde (A) est choisie parmi l'ensemble constitué par (i) les composés de la famille des alléthrines, cinérines, jasmolines et pyréthrines, (ii) les composés de formule II : 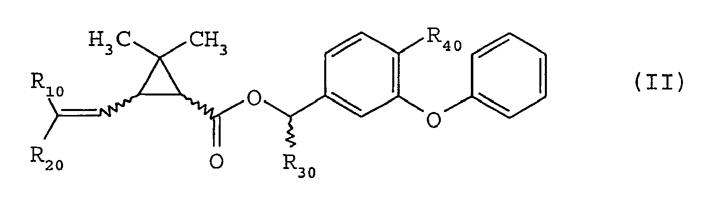 dans laquelle,
• R₁₀ et R₂₀, identiques ou différents, représentent chacun H, CH₃, OCH₃, SCH₃, CF₃, OCF₃, F, Cl ou Br ;
• R₃₀ représente H, CH₃, CN, CF₃, F, Cl ou Br ;
• R₄₀ représente H, CH₃, CF₃, OH, SH, F, Cl ou Br ; et,
• le symbole 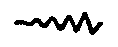 représente une liaison de configuration R ou S ;
et (iii) leurs mélanges.

5. Association (A + B) suivant l'une quelconque des revendications 1 à 4, **caractérisée en ce que** la substance pyrèthroïde (A) est choisie parmi l'ensemble constitué par la deltaméthrine, la cyperméthrine (plus avantageusement l'α-cyperméthrine), la cyhalothrine (plus avantageusement la λ- cyhalothrine) et l'alléthrine I.

6. Association (A + B) suivant l'une quelconque des revendications 1 à 5, **caractérisée en ce que** la substance éthyléniquement insaturée (B) est un tensioactif (B1) choisi parmi les amines et polyamines de formules III et IV, les amines et polyamines polyoxyalkylénées de formule V et les alkénylphénols polyoxyalkylénés de formule VI :
R-[NH-(CH₂)ₘ]ₙ-NH₂ (III) 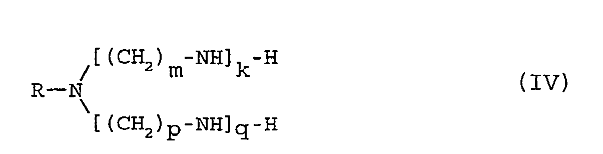 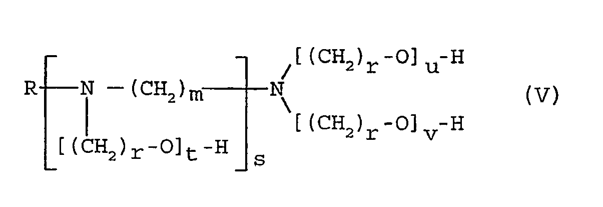 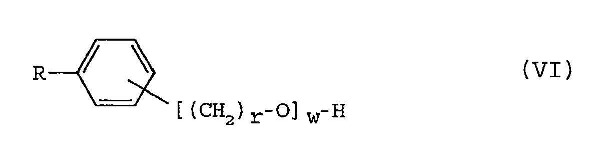
dans lesquelles :
R est un reste hydrocarboné aliphatique insaturé à chaîne linéaire (de préférence) ou ramifiée en C₈-C₂₂,
k est un nombre entier ayant pour valeur 1 à 8,
m est un nombre entier ayant pour valeur 2 à 8,
n est un nombre entier ayant pour valeur 0 à 8,
p est un nombre entier ayant pour valeur 1 à 8,
q est un nombre entier ayant pour valeur 1 à 8,
r est un nombre entier ayant pour valeur 2 ou 3,
s est un nombre entier ayant pour valeur 0 à 8,
t est un nombre entier ayant pour valeur 1 à 8,
u est un nombre entier ayant pour valeur 0 à 8, et
v est un nombre entier ayant pour valeur 0 à 8,
w est un nombre entier ayant pour valeur 3 à 8.

7. Association (A + B) suivant l'une quelconque des revendications 1 à 5, **caractérisée en ce que** la substance éthyléniquement insaturée (B) est un phosphate de vinyle (B2) présentant dans sa molécule la structure VII : 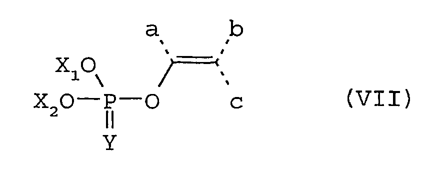 dans laquelle :
X₁ et X₂, identique ou différents, représentent chacun un groupe alkyle inférieur en C₁-C₄,
Y représente O ou S, et
--- représente une liaison avec un atome d'hydrogène (pour au plus deux des positions a, b et c) ou un autre atome (en positions a, b et/ou c),
la double liaison C=C pouvant être incluse dans un hétérocycle.

8. Association (A + B) suivant la revendication 7, **caractérisée en ce que** le phosphate de vinyle (B2) est le dichlorvos, le pirimiphos-méthyl, le chlorpyrifos, le chlorfenvinphos et/ou le crotoxyphos.

9. Premix **caractérisé par le fait qu'**il est un mélange intime d'un matériau polymère et de ladite association (A + B) selon l'une quelconque des revendications 1 à 8 et qu'il est extrudé sous forme de granulés.

10. Prémix suivant la revendication 9, **caractérisée en ce qu'**il est constitué d'un mélange intime de 15 à 30 % en poids sec de l'association (A + B) et de 85 à 70 % en poids sec d'un matériau polymère synthétique notamment choisi parmi les polyuréthanes, polypropylènes, polystyrènes, polyesters, poly(chlorure de vinyle), polyamides et leurs mélanges.

11. Composition insecticide et acaricide, **caractérisée en ce qu'**elle est constituée d'un mélange :
(a) d'un matériau polymère synthétique notamment choisi parmi les polyuréthanes, polypropylènes, polystyrènes, polyesters, poly(chlorure de vinyle), polyamides et leurs mélanges, et
(b) de ladite association (A + B) selon l'une quelconque des revendications 1 à 8 ; et **en ce qu'**elle est destinée à la réalisation d'un article sous forme
• de fibres ou filaments susceptibles de fournir des textiles tissés, non-tissés ou tricotés, ou
• de feuille.

12. Article insecticide et acaricide se présentant sous la forme de fibres, filaments ou feuille, **caractérisé en ce qu'**il est constitué d'un matériau polymère synthétique contenant dans sa masse, ladite association (A + B) selon l'une quelconque des revendications 1 à 8, la substance (A) de ladite association (A + B) étant ensuite libérée de façon lente et programmée dans le temps par diffusion pour créer un environnement hostile aux insectes et acariens nuisibles, et **en ce qu'**il est obtenu à partir de la composition insecticide et acaricide selon la revendication 11 par chauffage et extrusion.

13. Procédé pour la préparation d'un article selon la revendication 12, ledit procédé étant **caractérisé en ce qu'**il comprend les étapes consistant à
(1°) mélanger ledit matériau polymère synthétique avec ladite association (A + B) contenant le produit de la réaction de ladite substance pyrèthroïde (A) avec ladite substance éthyléniquement insaturée (B), et
(2°) chauffer et extruder le mélange résultant.

14. Procédé suivant la revendication 13, **caractérisé en ce qu'**il comprend les étapes consistant à :
(α) chauffer une association de 75 à 96 % en poids de ladite substance (A) et, respectivement, de 25 à 4 % en poids de ladite substance (B), à une température comprise entre 80 et 150 °C, pendant au moins 20 minutes, notamment pendant 30 à 60 minutes, sous agitation, pour homogénéiser ladite association (A + B), où ladite substance (A) est susceptible d'être un mélange de plusieurs énantiomères ;
(β) introduire sous agitation l'association (A + B), ainsi homogénéisée, dans une portion dudit matériau polymère synthétique ou de son(ses) précurseur(s), pour obtenir un premier mélange par chauffage et extrusion;
(γ) introduire sous agitation ledit premier mélange, ainsi obtenu, dans le reste dudit matériau polymère synthétique ou de son(ses) précurseur(s), pour obtenir un second mélange ; et
(δ) chauffer et extruder ledit second mélange résultant, ainsi obtenu, à une température inférieure ou égale à 300 °C, pour obtenir l'article insecticide et acaricide contenant dans sa masse ladite association (A + B), ledit article étant notamment, soit sous la forme de fibres, filaments ou feuille, soit sous la forme d'une étoffe textile tissée, non-tissée ou tricotée obtenue à partir desdits fibres ou filaments.

15. Procédé suivant la revendication 14, **caractérisé en ce que**, à l'étape (β), on introduit 15 à 30 % en poids sec (de préférence 25 % en poids sec) de ladite association (A + B) dans 85 à 70 % en poids sec dudit matériau polymère par chauffage et extrusion.

16. Procédé suivant la revendication 14, **caractérisé en ce que**, à l'étape (γ), on introduit 0,1 à 1 partie en poids dudit premier mélange dans 99,9 à 99 parties en poids dudit matériau polymère.

## Claims

1. Combination (A+B) of an insecticidal and acaricidal substance which can be used in the preparation of a premix and an article in the form
• of fibres or filaments which can provide woven, nonwoven or knitted textiles, or
• of a sheet
for combating parasites and pests belonging to the group consisting of the insects and acarids, such as flies, mosquitoes and lice,
the said combination being **characterized in that** it comprises:
• at least one pyrethroid substance (A) which is substantially stable up to a temperature of at least 150 °C, and preferably substantially stable up to a temperature of at least 300 °C;
• an ethylenically unsaturated substance (B) chosen from the group consisting of:
(a) surfactants (B1),
(b) vinyl phosphates (B2) and
(c) mixtures thereof; and
• an adduct (A-B) resulting from condensation of the pyrethroid substance (A) with the ethylenically unsaturated substance (B).

2. Combination (A + B) according to claim 1, **characterized in that** it has a solubility in ethanol of greater than or equal to 75 wt.%, and in particular between 75 and 90 wt.%.

3. Combination (A + B) according to claim 1 or 2, **characterized in that** it comprises
• 75 to 96 % by weight in total of a substance (A) chosen from the group consisting of pyrethroids which are substantially stable up to a temperature of at least 150 °C, and preferably substantially stable up to a temperature of at least 300 °C, and mixtures thereof; and
• 25 to 4 % by weight in total of an ethylenically unsaturated substance (B) chosen from the group consisting of surfactants (B1), vinyl phosphates (B2) and mixtures thereof, and which is substantially stable at a temperature of greater than or equal to 150 °C and advantageously substantially stable at a temperature of greater than or equal to 300 °C;
the said combination (A + B) containing the said adduct (A-B) which forms from a temperature of greater than or equal to 80 °C, in particular at a temperature of from 80 to 150 °C.

4. Combination (A + B) according to any one of claims 1 to 3, **characterized in that** the pyrethroid substance (A) is chosen from the group consisting of (i) compounds of the allethrin, cinerin, jasmolin and pyrethrin family, (ii) compounds of the formula II: 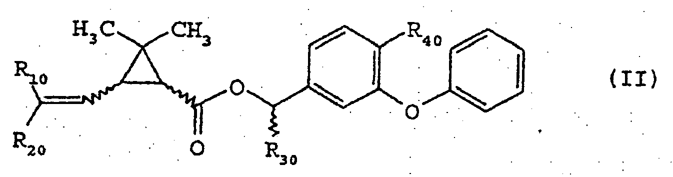 in which
• R₁₀ and R₂₀ are identical or different and each represent H, CH₃, OCH₃, SCH₃, CF₃, OCF₃, F, Cl or Br;
• R₃₀ represents H, CH₃, CN, CF₃, F, Cl or Br;
• R₄₀ represents H, CH₃, CF₃, OH, SH, F, Cl or Br; and
• the symbol 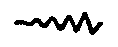 represents a bond having the R or S configuration;
and (iii) mixtures thereof.

5. Combination (A + B) according to any one of claims 1 to 4, **characterized in that** the pyrethroid substance (A) is chosen from the group consisting of deltamethrin, cypermethrin (more advantageously α-cypermethrin), cyhalothrin (more advantageously λ-cyhalothrin) and allethrin I.

6. Combination (A + B) according to any one of claims 1 to 5, **characterized in that** the ethylenically unsaturated substance (B) is a surfactant (B1) chosen from amines and polyamines of the formulae III and IV, polyoxyalkylenated amines and polyamines of the formula V and polyoxyalkylenated alkenylphenols of the formula VI:
R-[NH-(CH₂)ₘ]ₙ-NH₂ (III) 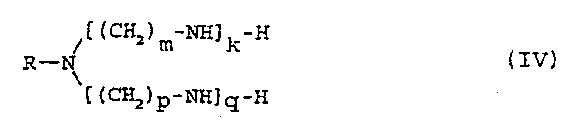 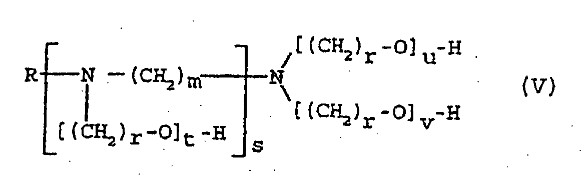 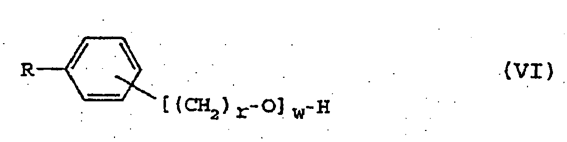
in which:
R is a C₈-C₂₂ unsaturated aliphatic hydrocarbon radical having a linear (preferably) or branched chain,
k is an integer having a value of 1 to 8,
m is an integer having a value of 2 to 8,
n is an integer having a value of 0 to 8,
p is an integer having a value of 1 to 8,
q is an integer having a value of 1 to 8,
r is an integer having a value of 2 or 3,
s is an integer having a value of 0 to 8,
t is an integer having a value of 1 to 8,
u is an integer having a value of 0 to 8, and
v is an integer having a value of 0 to 8,
w is an integer having a value of 3 to 8.

7. Combination (A + B) according to any one of claims 1 to 5, **characterized in that** the ethylenically unsaturated substance (B) is a vinyl phosphate (B2) having in its molecule the structure VII: 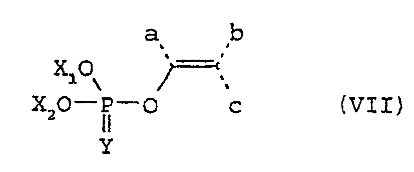 in which:
X₁ and X₂ are identical or different and each represent a C₁-C₄ lower alkyl group,
Y represents O or S, and
--- represents a bond with a hydrogen atom (for at most two of positions a, b and c) or another atom (in positions a, b and/or c),
it being possible for the C=C double bond to be included in a heterocyclic radical.

8. Combination (A + B) according to claim 7, **characterized in that** the vinyl phosphate (B2) is dichlorvos, pirimiphos-methyl, chlorpyrifos, chlorfenvinphos and/or crotoxyphos.

9. Premix, **characterized in that** it is an intimate mixture of a polymeric material and the said combination (A + B) according to any one of claims 1 to 8 and **in that** it is extruded in the form of granules.

10. Premix according to claim 9, **characterized in that** it comprises an intimate mixture of from 15 to 30 % by dry weight of the combination (A + B) and from 85 to 70 % by dry weight of a synthetic polymeric material, in particular chosen from polyurethanes, polypropylenes, polystyrenes, polyesters, poly(vinyl chloride), polyamides and mixtures thereof.

11. Insecticidal and acaricidal composition, **characterized in that** it comprises a mixture:
(a) of a synthetic polymeric material, in particular chosen from polyurethanes, polypropylenes, polystyrenes, polyesters, poly(vinyl chloride), polyamides and mixtures thereof, and
(b) the said combination (A + B) according to any one of claims 1 to 8; and **in that** it is intended for the preparation of an article in the form
• of fibres or filaments which can provide woven, nonwoven or knitted textiles, or
• of a sheet.

12. Insecticidal and acaricidal article in the form of fibres, filaments or a sheet, **characterized in that** it comprises a synthetic polymeric material containing in its mass the said combination (A + B) according to any one of claims 1 to 8, the substance (A) of the said combination (A + B) being subsequently released in a slow and programmed manner with respect to time by diffusion in order to create an environment which is hostile to insect and acarid pests, and **in that** it is obtained from the insecticidal and acaricidal composition according to claim 11 by heating and extrusion.

13. Process for the preparation of an article according to claim 12, the said process being **characterized in that** it comprises steps consisting of
(1.) mixing of the said synthetic polymeric material with the said combination (A + B) containing the product of the reaction of the said pyrethroid substance (A) with the said ethylenically unsaturated substance (B) and
(2.) heating and extrusion of the resulting mixture.

14. Process according to claim 13, **characterized in that** it comprises steps consisting of:
(α) heating of a combination of from 75 to 96 % by weight of the said substance (A) and, respectively, from 25 to 4 % by weight of the said substance (B) at a temperature of between 80 and 150°C for at least 20 minutes, in particular for 30 to 60 minutes, while stirring, in order to homogenize the said combination (A + B), where the said substance (A) can be a mixture of several enantiomers;
(β) introduction, while stirring, of the combination (A + B) homogenized in this way into a portion of the said synthetic polymeric material or of its precursor(s) in order to obtain a first mixture by heating and extrusion;
(γ) introduction, while stirring, of the said first mixture obtained in this way into the remainder of the said synthetic polymeric material or of its precursor(s) in order to obtain a second mixture; and
(δ) heating and extrusion of the said resulting second mixture obtained in this way at a temperature of less than or equal to 300 °C in order to obtain the insecticidal and acaricidal article comprising in its mass the said combination (A + B), the said article being, in particular, either in the form of fibres, filaments or a sheet or in the form of a woven, nonwoven or knitted textile fabric obtained from the said fibres or filaments.

15. Process according to claim 14, **characterized in that** in step (β) 15 to 30 % by dry weight (preferably 25 % by dry weight) of the said combination (A + B) is introduced into 85 to 70 % by dry weight of the said polymeric material by heating and extrusion.

16. Process according to claim 14, **characterized in that** in step (γ) 0.1 to 1 part by weight of the said first mixture is introduced into 99.9 to 99 parts by weight of the said polymeric material.

## Patentansprüche

1. Assoziat (A + B) aus einer insektiziden und einer akariziden Substanz, verwendbar bei der Herstellung einer Vormischung und eines Gegenstandes
- in Form von Fasern oder Fäden, die geeignet sind, gewebte, nicht gewebte oder gestrickte Textilien zu liefern oder
- in Blattform
zur Bekämpfung von Parasiten und Schädlingen, die zur Gesamtheit der Insekten oder Milben gehören, wie Fliegen, Stechmücken und Läuse, wobei das Assoziat **dadurch gekennzeichnet ist, dass** es folgendes enthält:
- wenigstens eine pyrethroide Substanz (A), die im Wesentlichen bis zu einer Temperatur von wenigstens 150°C stabil ist und vorzugsweise bis zu einer Temperatur von wenigstens 300°C stabil ist;
- eine ethylenisch ungesättigte Substanz (B), ausgewählt aus der Gesamtheit, bestehend aus:
a) grenzflächenaktiven Substanzen (B1)
b) Vinylphosphaten (B2) und
c) ihren Gemischen; und
- ein Addukt (A-B), entstanden aus der Kondensation der pyrethroiden Substanz (A) mit der ethylenisch ungesättigten Substanz (B).

2. Assoziat (A + B) nach Anspruch 1, **dadurch gekennzeichnet, dass** es eine Löslichkeit in Ethanol von mehr als oder gleich 75 Gewichtsteilen, insbesondere zwischen 75 und 90 Gewichtsteilen aufweist.

3. Assoziat (A + B) nach Anspruch 1 oder 2, **dadurch gekennzeichnet, dass** es umfasst:
- 75 bis 96 Gewichtsprozent einer Substanz (A), ausgewählt aus der Gesamtheit, bestehend aus den Pyrethroiden, die bei einer Temperatur von wenigstens bis zu 150°C stabil sind und vorzugsweise bis zu einer Temperatur von mehr oder gleich 300°C stabil sind, und ihren Gemischen; und
- 25 bis 4 Gewichtsprozent einer ethylenisch ungesättigten Substanz (B), ausgewählt aus grenzflächenaktiven Substanzen (B1), Vinylphosphaten (B2) und ihren Gemischen und die im wesentlichen bei einer Temperatur von mehr oder gleich 150°C stabil sind und vorzugsweise im Wesentlichen stabil bei einer Temperatur von höher oder gleich 300°C;
und wobei das Assoziat (A+B) das Addukt (A-B) enthält, dass sich von einer Temperatur an bildet, die höher oder gleich 80°C ist, insbesondere bei einer Temperatur von 80 bis 150°C.

4. Assoziat (A + B) nach einem der Ansprüche 1 bis 3, **dadurch gekennzeichnet, dass** die pyrethroide Substanz (A) ausgewählt ist aus der Gesamtheit, bestehend aus (i) den Verbindungen aus der Familie der Allethrine, Cinerine, Jasmoline und Pyrethrine, (ii) den Verbindungen der Formel II 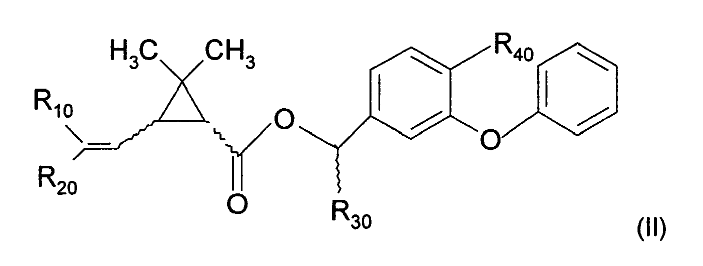 worin
- R₁₀ und R₂₀ gleich oder verschieden sind und jedes davon H, CH₃, OCH₃, SCH₃, CF₃, OCF₃, F, Cl oder Br darstellt,
- R₃₀H, CH₃, CN, CF₃, F, Cl oder Br darstellt,
- R₄₀ H, CH₃, CF₃, OH, SH, F, Cl oder Br darstellt und
- das Symbol 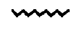 eine Bindung in R oder S Konfiguration darstellt, und
(iii) deren Gemische.

5. Assoziat (A + B) nach einem der Ansprüche 1 bis 4, **dadurch gekennzeichnet, dass** die pyrethroide Substanz (A) ausgewählt ist aus der Gesamtheit, bestehend aus Deltamethrin, Cypermethrin (noch bevorzugter alpha-Cypermethrin), Cyhalothrin (noch bevorzugter lambda-Cyhalothrin) und Allethrin I.

6. Assoziat (A + B) nach einem der Ansprüche 1 bis 5, **dadurch gekennzeichnet, dass** die ethylenisch ungesättigte Substanz (B) eine grenzflächenaktive Substanz (B1) ist, ausgewählt aus den Aminen und Polyaminen mit den Formeln III und IV, den polyoxyalkylenierten Aminen und Polyaminen der Formel V und den polyoxyalkylenierten Alkenylphenolen der Formel VI:
R-[NH-(CH₂)ₘ]ₙ-NH₂ (III) 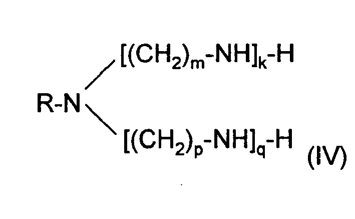 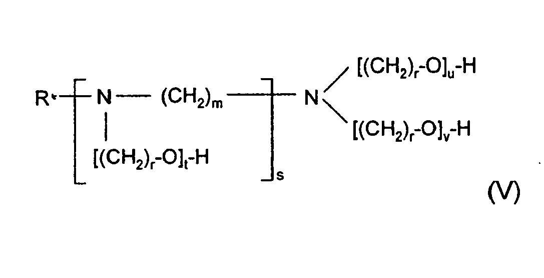 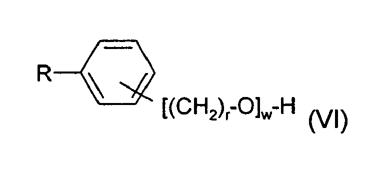
worin
R ein geradkettiger (vorzugsweise) oder verzweigter C₈-C₂₂ aliphatischer ungesättigter Kohlenwasserstoffrest ist
k eine ganze Zahl mit einem Wert von 1 bis 8 ist,
m eine ganze Zahl mit einem Wert von 2 bis 8 ist,
n eine ganze Zahl mit einem Wert von 0 bis 8 ist,
p eine ganze Zahl mit einem Wert von 1 bis 8 ist,
q eine ganze Zahl mit einem Wert von 1 bis 8 ist,
r eine ganze Zahl mit einem Wert von 2 oder 3 ist,
s eine ganze Zahl mit einem Wert von 0 bis 8 ist,
t eine ganze Zahl mit einem Wert von 1 bis 8 ist,
u eine ganze Zahl mit einem Wert von 0 bis 8 ist, und
v eine ganze Zahl mit einem Wert von 0 bis 8 ist,
w eine ganze Zahl mit einem Wert von 3 bis 8 ist.

7. Assoziat (A + B) nach einem der Ansprüche 1 bis 5, **dadurch gekennzeichnet, dass** die ethylenisch ungesättigte Substanz (B) ein Vinylphosphat (B2) ist, dass in seinem Molekül die Struktur VII aufweist: 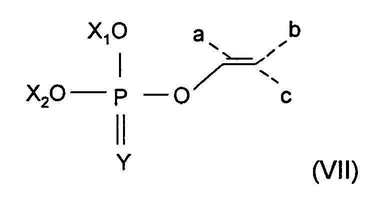 worin
X₁ und X₂ gleich oder verschieden sind und jedes davon eine C₁-C₄ Niederalkylgruppe darstellt,
Y O oder S darstellt, und
- eine Bindung mit einem Wasserstoffatom (höchstens für zwei der Positionen a, b und c) oder ein anderes Atom (in den Positionen a, b und/oder c) darstellt,
wobei die Doppelbindung C=C in einem Heterozyklus eingeschlossen sein kann.

8. Assoziat (A + B) nach Anspruch 7, **dadurch gekennzeichnet, dass** das Vinylphosphat (B2) Dichlorvos, Methyl-Pirimphos, Chlorpyrifos, Chlorfenvinphos und/oder Crotoxyphos ist.

9. Vormischung, **dadurch gekennzeichnet, dass** sie eine innige Mischung eines polymeren Materials und des Assoziats (A + B) nach einem der Ansprüche 1 bis 8 ist und dass sie in Granulatform extrudiert wird.

10. Vormischung nach Anspruch 9, **dadurch gekennzeichnet, dass** sie aus einer innigen Mischung aus 15 bis 30 % Trockengewicht des Assoziats (A + B) und aus 85 bis 70 % Trockengewicht eines synthetischen Polymermaterials, das insbesondere ausgewählt ist aus Polyurethanen, Polypropylenen, Polystyrolen, Polyestern, Poly(vinylchloriden), Polyamiden und deren Gemische, aufgebaut ist.

11. Insektizide und akarizide Zusammensetzung, **dadurch gekennzeichnet, dass** sie aus einer Mischung aufgebaut ist aus:
(a) einem synthetischen polymeren Materials, insbesondere ausgewählt aus Polyurethanen, Polypropylenen, Polystyrolen, Polyestern, Poly(vinylchloriden), Polyamiden und deren Mischungen, und
(b) des Assoziats (A + B) nach einem der Ansprüche 1 bis 8
und dass sie für die Herstellung eines Gegenstandes geeignet ist, der vorliegt
- in Form von Fasern oder Fäden, die geeignet sind, gewebte, nicht gewebte oder gestrickte Textilien zu liefern oder
- in Blattform

12. Insektizider und akarizider Gegenstand, der in Form von Fasern, Fäden oder in Blattform vorliegt, **dadurch gekennzeichnet, dass** er aus einem synthetischen polymeren Material aufgebaut ist, der in seiner Masse das Assoziat (A+B) nach einem der Ansprüche 1 bis 8 enthält, wobei die Substanz A des Assoziats (A+B) anschließend zeitlich langsam und programmierbar mittels Diffusion freigesetzt wird, um eine für schädliche Insekten und Milben feindliche Umgebung zu erzeugen, und dass sie ausgehend von einer von einer insektiziden und akariziden Zusammensetzung nach Anspruch 11 durch Erwärmen und Extrusion erhalten wird.

13. Verfahren zur Herstellung eines Gegenstandes nach Anspruch 12, wobei das Verfahren **dadurch gekennzeichnet ist, dass** es die Schritte umfasst, bestehend aus
(1) dem Mischen des synthetischen polymeren Materials mit dem Assoziat (A+B), welches das Reaktionsprodukt der pyrethroiden Substanz (A) mit der ethylenisch ungesättigten Substanz (B) enthält, und
(2) dem Erwärmen und Extrudieren der resultierenden Mischung.

14. Verfahren nach Anspruch 13, **dadurch gekennzeichnet, dass** es die Schritte enthält, bestehend aus
α) dem Erwärmen unter Rühren einer Zusammensetzung aus 75-96 Gewichtsprozent der Substanz (A) und 25 bis 4 Gewichtsprozent der Substanz (B) bei einer Temperatur von zwischen 80 und 150°C während mindestens 20 Minuten, insbesondere zwischen 30 und 60 Minuten, um das Assoziat (A+B) zu homogenisieren, wobei die Substanz (A) eine Mischung aus verschiedenen Enantiomeren sein kann;
β) dem Zugeben unter Rühren des derart homogenisierten Assoziats (A+B) zu einem Teil des synthetischen polymeren Materials oder seiner/seines Vorläufer/s, um eine erste Mischung durch Erwärmen und Extrusion zu erhalten.
γ) dem Zugeben unter Rühren der derart erhaltenen ersten Mischung bei einer Temperatur von weniger oder gleich 300°C, um einen insektiziden und akariziden Gegenstand zu erhalten, der in seiner Masse das Assoziat (A+B) enthält, wobei der Gegenstand insbesondere entweder in Form von Fasern, Fäden, oder in Blattform vorliegt oder in Form eines gewebten, nicht gewebten oder gestrickten Textilstoffes, der ausgehend von den Fasern oder Fäden erhalten wurde.

15. Verfahren nach Anspruch 14, **dadurch gekennzeichnet, dass** in Schritt (β) 15 bis 30 % Trockengewicht (vorzugsweise 25 % Trockengewicht) des Assoziats (A+B) zu 85 bis 70 % Trockengewicht des polymeren Materials mittels Erwärmen und Extrusion zugegeben werden.

16. Verfahren nach Anspruch 14, **dadurch gekennzeichnet, dass** in Schritt (γ) 0,1 bis 1 Gewichtsteile der ersten Mischung zu 99,9 bis 99 Gewichtsteilen des polymeren Materials gegeben werden.
